# FASCICULE DE BREVET EUROPEEN

(11) **EP 3 571 385 B1**
(45) Date de publication et mention de la délivrance du brevet: **28.04.2021**
(21) Numéro de dépôt: 18704278.3
(22) Date de dépôt: 19.01.2018
(51) Int. Cl.: F02K 9/46, F02K 9/60, H02K 7/18

(54) **MOTEUR-FUSÉE**
RAKETENMOTOR
ROCKET ENGINE

(30) Priorité: 23.01.2017 FR 1700054
(43) Date de publication de la demande: 27.11.2019
(73) Titulaire: ArianeGroup SAS, 75015 Paris (FR)
(72) Inventeur: VUILLAMY, Didier, 76230 Quincampoix (FR); EDELINE, Emmanuel, 27630 Ecos (FR); LASSOUDIERE, François, 27200 Vernon (FR)
(74) Mandataire: Cabinet Beau de Loménie
(86) Numéro de dépôt international: PCT/FR2018/050142
(87) Numéro de publication internationale: WO 2018/134541

(56) Documents cités:
- FR-A1- 2 991 391
- US-A1- 2014 260 186
- US-A1- 2015 288 309

## Description

L'invention concerne un moteur-fusée et plus précisément, la production d'énergie électrique dans un moteur-fusée.

Elle concerne notamment, mais pas exclusivement, des moteurs fusées comportant un circuit d'alimentation en ergol comportant une turbopompe qui sert à mettre le flux d'ergol circulant dans le circuit sous pression avant l'injection de celui-ci dans la chambre de combustion du moteur.

Plus particulièrement, l'invention concerne des moteurs-fusées du type indiqué ci-dessus dont le cycle thermodynamique est du type « expander ».

Un circuit d'alimentation en ergol d'un moteur de type « expander » relie la sortie de la pompe de la turbopompe avec l'entrée de la turbine de la turbopompe à travers un échangeur de chaleur configuré pour chauffer l'ergol avec de la chaleur générée dans la chambre de combustion pour actionner la turbine de la turbopompe par détente du premier ergol après son chauffage. Les gaz sortant de la turbine de la turbopompe sont alors dirigés vers la chambre de combustion.

### ARRIÈRE-PLAN DE L'INVENTION

On connaît, par exemple grâce aux documents FR2991391 ou US 2015/288309 A1, différentes sources d'énergie électrique exploitables dans des moteurs-fusées du type indiqué ci-dessus.

Dans de tels moteurs, un générateur électrique peut par exemple être agencé sur l'arbre de la turbine de la turbopompe pour produire de l'électricité.

Cependant, cet agencement présente l'inconvénient que le générateur électrique ne produit d'électricité que lorsque la turbopompe est entraînée en rotation ; il reste donc inexploitable pour les phases de démarrage.

De manière alternative, il est également possible d'intégrer au moteur-fusée une pile à combustible ou des batteries. Ces solutions induisent une complexité et/ou une masse accrue, et restent donc assez peu satisfaisantes.

### OBJET ET RESUME DE L'INVENTION

L'objectif de l'invention est donc de remédier aux inconvénients indiqués ci-dessus, et de proposer un moteur-fusée comportant une source d'électricité souple, pouvant être exploitée pour alimenter le moteur-fusée en électricité de préférence pendant l'ensemble des phases de vol.

Cet objectif est atteint grâce à un moteur-fusée comportant une chambre de combustion principale ;
une tuyère principale pour éjecter les gaz de combustion produits dans la chambre de combustion principale ;
deux pompes d'alimentation en ergols disposées sur des circuits d'alimentation en ergols du moteur et configurées pour mettre les ergols sous pression afin de permettre l'alimentation de la chambre de combustion principale ;
deux pompes de pressurisation pour pressuriser les réservoirs des ergols servant à l'alimentation du moteur ;
un générateur électrique ; le générateur électrique comprenant :
- un générateur de gaz configuré pour être alimenté en mélange d'ergols pour provoquer une combustion ;
- une turbine de génération d'électricité configurée pour être entraînée par des gaz de combustion du générateur de gaz ; et
- un alternateur couplé mécaniquement à un arbre de la turbine de génération d'électricité ;
le moteur-fusée étant configuré de manière à permettre l'alimentation du générateur de gaz en ergols par les deux pompes de pressurisation, et de manière à permettre l'alimentation du générateur électrique (ou générateur d'électricité) indépendamment de la rotation des pompes d'alimentation.

De manière connue en soi, le moteur est généralement relié à deux réservoirs d'ergols. Les pompes de pressurisation sont alors employées pour pressuriser les réservoirs d'ergols servant à l'alimentation du moteur, c'est-à-dire pour maintenir ces réservoirs à une pression adéquate notamment pendant les phases de fonctionnement du moteur-fusée.

Chacune des pompes de pressurisation peut être placée (ou non) à l'intérieur du réservoir qu'elle sert à maintenir sous pression. Placer une pompe de pressurisation dans le réservoir permet, avantageusement pour les ergols cryogéniques, de se dispenser d'une phase de mise en froid préalable lors du démarrage du moteur-fusée.

Le générateur électrique permet d'alimenter le moteur-fusée en électricité.

L'électricité qu'il produit peut notamment servir à alimenter une ou plusieurs des pompes d'alimentation (si celles-ci sont électriques). Ces pompes peuvent alors pomper le ou les ergols de manière à alimenter la chambre de combustion. Elle peut aussi servir à alimenter les pompes de pressurisation, ou plus généralement tout organe électrique du moteur-fusée, par exemple des électro-vannes, etc.

Comme le moteur-fusée est configuré de manière à ce que l'alimentation du générateur électrique soit indépendante de la rotation des pompes d'alimentation, le générateur électrique peut fonctionner indépendamment du fait que la ou les pompes d'alimentation tournent ou non ; il peut ainsi fonctionner lorsque celles-ci tournent, ou lorsque celles-ci sont à l'arrêt. Le générateur électrique peut donc fonctionner indépendamment de l'alimentation du moteur en ergols, et donc indépendamment du régime de fonctionnement du moteur. Par conséquent, le moteur-fusée bénéficie d'une alimentation en électricité exploitable à tout moment, quelle que soit la phase de vol.

Cela dit, il faut naturellement adopter des dispositions adéquates pour permettre l'alimentation du générateur de gaz pendant la brève période de démarrage du générateur électrique : en effet, avant que celui-ci n'ait démarré, il ne peut entraîner les pompes de pressurisation. Deux solutions notamment peuvent être envisagées : on peut soit prévoir une petite batterie, dimensionnée pour actionner brièvement les pompes de pressurisation jusqu'au démarrage du générateur électrique ; ou bien, la pression des gaz dans les réservoirs d'ergols peut être suffisante pour permettre le démarrage du générateur électrique.

Chacune des pompes d'alimentation en ergols peut être une pompe électrique ou une turbopompe. Par exemple, une des pompes d'alimentation peut être une pompe électrique, et le générateur électrique est configuré pour alimenter celle-ci en électricité.

Une des pompes d'alimentation peut également être une pompe d'une turbopompe disposée en aval d'une des pompes de pressurisation sur un premier circuit d'alimentation permettant l'alimentation en ergol de la chambre de combustion principale du moteur-fusée.

Dans une variante de ce dernier mode de réalisation, le moteur-fusée peut être du type dit à cycle « expander », c'est-à-dire que le premier circuit d'alimentation relie la sortie de la pompe de la turbopompe avec l'entrée d'une turbine de la turbopompe à travers un échangeur de chaleur configuré pour chauffer le premier ergol avec une chaleur générée dans une chambre de combustion du moteur-fusée pour actionner la turbine de la turbopompe par détente du premier ergol après son chauffage. Dans ce mode de réalisation, les gaz s'échappant de la turbine de la turbopompe sont intégralement réinjectés dans la chambre de combustion principale du moteur fusée.

De manière générale, les gaz s'échappant de la turbine de génération d'électricité peuvent être rejetés de différentes manières à l'extérieur. Notamment, ces gaz peuvent être rejetés dans la chambre de combustion principale, et/ou dans une tuyère auxiliaire servant à éjecter ces gaz à l'extérieur. Dans ce dernier cas, de préférence le moteur-fusée comprend une tuyère auxiliaire, à laquelle est relié un orifice d'échappement de la turbine de génération d'électricité. L'expression « tuyère auxiliaire » désigne ici une tuyère distincte de la tuyère principale du moteur-fusée et de petite taille par rapport à celle-ci. Avantageusement, la pression des gaz en sortie de la turbine de génération d'électricité peut alors être très faible. Grâce à l'éjection des gaz dans la tuyère auxiliaire, avantageusement la turbine peut présenter un rapport de détente élevé, et ainsi transmettre une puissance mécanique élevée à l'alternateur.

D'autre part, lorsque le moteur-fusée comprend une tuyère auxiliaire à laquelle est relié un orifice d'échappement de la turbine de génération d'électricité, et qu'un circuit d'alimentation du moteur-fusée comporte une turbopompe, avantageusement la tuyère auxiliaire peut également permettre de récupérer de l'énergie des gaz rejetés par la turbine de la turbopompe.

En effet dans ce cas, on peut prévoir qu'un orifice d'échappement de la turbine de la turbopompe soit relié à un conduit qui comporte au moins deux branches, à savoir une première branche servant à conduire les gaz d'échappement de la turbine de la turbopompe jusqu'à la chambre de combustion, et une deuxième branche reliée à un orifice d'entrée de la turbine de génération d'électricité. Avantageusement, le générateur électrique permet alors de produire de l'électricité à partir des gaz rejetés par la turbine de la turbopompe. De plus, cela peut éventuellement permettre d'arrêter le générateur de gaz : on produit alors de l'électricité en faisant tourner la turbine de génération d'électricité seulement à partir des gaz rejetés par la turbine de la turbopompe.

Le premier circuit d'alimentation peut être agencé de différentes manières.

Dans un mode de réalisation indiqué précédemment, le moteur-fusée est du type dit à cycle « expander ». Dans ce cas, le moteur-fusée peut être configuré de manière à conduire la totalité des gaz s'échappant de la turbine de la turbopompe dans la chambre de combustion. Par exemple, l'orifice d'échappement de la turbine de la turbopompe peut être relié à un conduit d'échappement de turbine de turbopompe, qui sert à conduire les gaz s'échappant de la turbine de la turbopompe uniquement jusqu'à la chambre de combustion. Le premier circuit est alors du type à cycle fermé, le flux de premier ergol réchauffé avec la chaleur générée dans la chambre de combustion étant réinjecté intégralement dans celle-ci.

Ce mode de réalisation n'exclut pas cependant que la turbine de génération d'électricité comporte de plus un conduit d'échappement qui débouche dans le conduit d'échappement de turbine de turbopompe, et permette ainsi de rejeter dans celui-ci les gaz rejetés par la turbine de génération d'électricité.

Par ailleurs, comme signalé précédemment, le moteur-fusée peut comprendre une tuyère auxiliaire.

Dans un mode de réalisation, la tuyère auxiliaire sert uniquement à rejeter les gaz de combustion produits par le générateur de gaz. Cependant, de manière alternative (ou en plus) la tuyère auxiliaire peut être utilisée pour rejeter d'autres gaz. Ainsi, lorsqu'une pompe d'alimentation est une turbopompe, le moteur-fusée peut ainsi notamment comporter un conduit pour conduire les gaz s'échappant de la turbine de la turbopompe (pour un circuit expander, il s'agit d'un ergol en phase vapeur) jusqu'à la tuyère auxiliaire.

Dans ce cas, le premier circuit peut alors être du type dit à cycle « bleed total » ou « bleed partiel », selon qu'il est configuré pour conduire dans la tuyère auxiliaire tout ou partie des gaz s'échappant de la turbine de la turbopompe.

Dans le cas où le premier circuit est de type « bleed partiel », le premier circuit est configuré pour conduire une partie des gaz s'échappant de la turbine dans ladite tuyère auxiliaire, et une partie dans la chambre de combustion. L'unité de commande du moteur-fusée est normalement alors prévue pour piloter, au moyen de valves commandables, les proportions relatives des gaz s'échappant de la turbine qui sont dirigés respectivement vers la tuyère auxiliaire et vers la chambre de combustion, en fonction de la phase de vol et des valeurs de différents paramètres.

Par suite, les différents agencements suivants sont possibles dans le cas où le moteur-fusée comprend une tuyère auxiliaire :
- un orifice d'échappement de la turbine de la turbopompe est relié à la tuyère auxiliaire ;
- l'orifice d'échappement de la turbine de la turbopompe est relié à un conduit qui comporte au moins deux branches, à savoir une première branche servant à conduire les gaz d'échappement de la turbine de la turbopompe jusqu'à la chambre de combustion, et une deuxième branche reliée à la tuyère auxiliaire et/ou à un orifice de sortie ou d'entrée de la turbine de génération d'électricité.

La deuxième branche du conduit reliée à l'orifice de sortie de la turbine de génération d'électricité permet, le cas échéant, que les gaz de sortie de cette turbine soient évacués via la chambre de combustion principale du moteur-fusée.

Tout ou une partie des perfectionnements indiqués ci-dessus en relation avec le premier circuit alimentant le moteur-fusée en premier ergol peut naturellement être éventuellement également mis en œuvre pour tout autre circuit d'alimentation servant à l'alimentation en ergol(s) du moteur-fusée.

D'autre part, comme cela a été exposé précédemment le générateur de gaz peut éventuellement être exploité seulement pour produire de l'électricité pour le moteur-fusée.

Cependant, la présente invention n'exclut pas que l'énergie des gaz de combustion produits par le générateur de gaz soit utilisée pour d'autres usages. Par exemple, cette énergie peut être utilisée pour assurer la mise sous pression d'un ou plusieurs réservoirs d'ergols.

Ainsi dans un mode de réalisation, le moteur-fusée comprend en outre un échangeur thermique apte à échauffer et/ou vaporiser au moins en partie l'un des ergols en prélevant de la chaleur sur des gaz de combustion produits par le générateur de gaz.

L'échangeur thermique et le circuit associé constituent alors un dispositif de pressurisation apte à assurer le maintien d'une pression prédéterminée dans le premier réservoir.

Bien que dans ce mode de réalisation, il ne soit seulement indiqué que le premier réservoir est doté d'un tel système de pressurisation, on comprend cependant que plus généralement, dans le cadre de l'invention, tout réservoir d'ergol peut ou non (et donc éventuellement, plusieurs réservoirs peuvent) être équipé(s) d'un tel système de pressurisation, afin d'exploiter l'énergie produite par la combustion des gaz du générateur de gaz.

De préférence, l'invention est mise en œuvre dans un moteur-fusée configuré pour générer une poussée maximale inférieure à 100 kN. Elle peut cependant être mise en œuvre dans des moteurs développant une poussée supérieure.

### BREVE DESCRIPTION DES DESSINS

L'invention sera bien comprise et ses avantages apparaîtront mieux, à la lecture de la description détaillée qui suit, de plusieurs modes de réalisation représentés à titre d'exemples non limitatifs. La description se réfère aux dessins annexés sur lesquels :
- la figure 1 est une vue schématique d'un moteur-fusée suivant un premier mode de réalisation de l'invention ;
- la figure 2 est une vue schématique d'un moteur-fusée suivant un deuxième mode de réalisation de l'invention ;
- la figure 3 est une vue schématique d'un moteur-fusée suivant un troisième mode de réalisation de l'invention ; et
- la figure 4 est une vue schématique d'un moteur-fusée suivant un quatrième mode de réalisation de l'invention.

### DESCRIPTION DETAILLEE DE L'INVENTION

L'invention va maintenant être illustrée à travers quatre modes de réalisation présentant des moteurs-fusées ayant différents types de cycle de combustion.

Les moteurs-fusées présentés sont des moteurs à hydrogène et oxygène liquides, mais l'invention peut être mise en œuvre avec d'autres ergols. Par exemple, le carburant peut également être du méthane, de l'éthanol ou du kérosène.

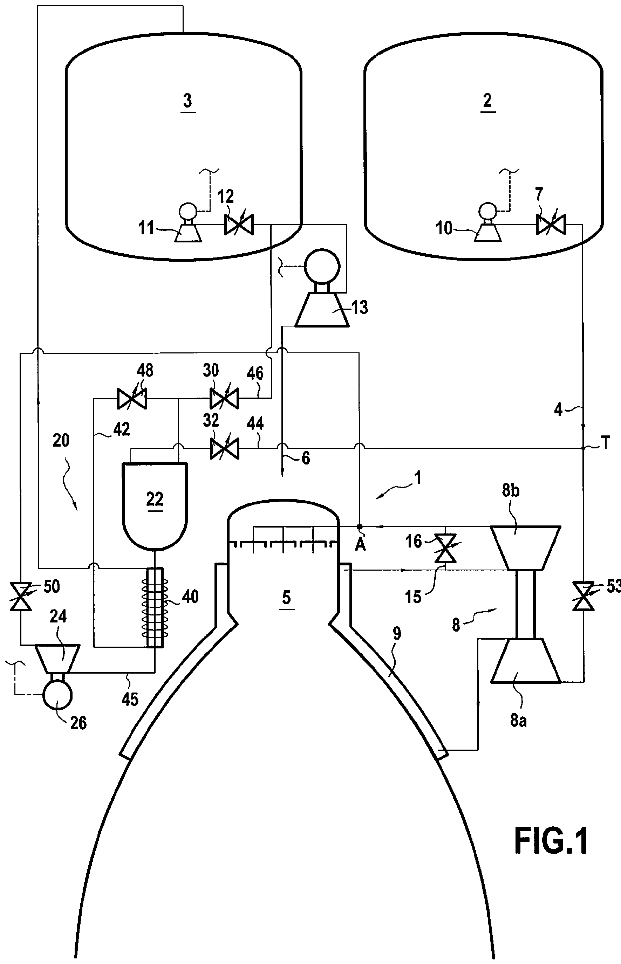

La figure 1 illustre un moteur-fusée 1 comprenant une chambre de combustion 5 et un générateur électrique 20 pour l'alimentation du moteur-fusée 1 en électricité, suivant un premier mode de réalisation.

Le moteur-fusée 1 comprend un réservoir 2 contenant de l'hydrogène à l'état liquide, un réservoir 3 contenant de l'oxygène à l'état liquide, un circuit d'hydrogène 4 relié au réservoir 2 pour alimenter la chambre de combustion 5 en hydrogène, et un circuit d'oxygène 6 relié au réservoir 3 pour alimenter la chambre de combustion 5 en oxygène.

Dans ce mode de réalisation, le circuit d'hydrogène 4 comporte une pompe de pressurisation 10, une vanne d'entrée 7, une turbopompe 8 avec une pompe d'alimentation 8a et une turbine 8b couplées mécaniquement, et un échangeur de chaleur 9 formé dans les parois de la chambre de combustion 5 de manière à transférer de la chaleur de la chambre de combustion 5 à l'hydrogène pendant sa circulation à travers l'échangeur de chaleur 9. L'échangeur de chaleur 9 est situé, dans le premier circuit 4, en aval de la pompe 8a et en amont de la turbine 8b. Ainsi, le transfert de chaleur dans l'échangeur 9 contribue simultanément à refroidir les parois de la chambre de combustion 5 et à vaporiser l'hydrogène liquide entre la pompe 8a et la turbine 8b. La détente de l'hydrogène dans la turbine 8b actionne la turbopompe 8. Ainsi, ce circuit 4 d'hydrogène du premier mode de réalisation fonctionne suivant un cycle « expander ».

Ce circuit d'hydrogène 4 comporte aussi un passage 15 de contournement ou de bipasse de la turbine 8b, avec une vanne de contournement 16. Par ce passage 15, le flux d'hydrogène sortant de l'échangeur de chaleur 9 peut être injecté dans la chambre de combustion 5 sans passer à travers la turbine 8b.

La pompe de pressurisation 10 est une pompe électrique immergée dans l'hydrogène liquide dans le premier réservoir 2 et sert à pomper l'hydrogène à travers le circuit 4, assurant ainsi le gavage de la pompe 8a et empêchant des phénomènes de cavitation. Cette pompe 10 et la vanne d'entrée 7 peuvent être intégrées dans un même module à l'intérieur du réservoir 2 d'hydrogène liquide, de manière à simplifier l'ensemble et limiter son encombrement.

Le circuit d'oxygène 6 comporte principalement une pompe de pressurisation 11, une vanne d'entrée 12 et une pompe d'alimentation 13. La pompe de pressurisation 11 est une pompe électrique immergée dans le réservoir 3 d'oxygène liquide qui sert à pomper l'oxygène liquide via le circuit 6 jusqu'à l'orifice d'aspiration de la deuxième pompe électrique 13. La pompe d'alimentation 13 est une pompe de forte puissance, notamment de puissance bien supérieure à celle de la pompe de pressurisation 11. Dans une variante du mode de réalisation présenté, la vanne d'entrée 12 peut éventuellement être intégrée dans un même module que la pompe de pressurisation 11 et ainsi placée à l'intérieur du réservoir 3 d'oxygène liquide. La pompe d'alimentation 13 peut être placée à l'extérieur ou à l'intérieur du réservoir 3.

Contrairement au circuit d'hydrogène 4, le circuit 6 d'oxygène liquide ne comporte pas de turbopompe ; ainsi, le moteur-fusée 1 avantageusement ne comporte qu'une seule turbopompe (8), ou du moins, une seule turbopompe de puissance élevée (plusieurs centaines de kilowatts).

Pour l'alimentation en électricité de la pompe d'alimentation 13 et (hormis pendant la phase initiale de démarrage) des pompes de pressurisation 10 et 11, le dispositif d'alimentation comporte un générateur électrique 20.

Ce générateur électrique 20 comprend un générateur de gaz 22, une turbine de génération d'électricité 24, et un alternateur 26 couplé mécaniquement avec un arbre de la turbine 24.

Le générateur de gaz 22 est configuré pour être alimenté en mélange d'ergols de manière indépendante de l'état de rotation des pompes 8a et 13. Dans ce but, il est connecté à des dérivations 44 et 46 respectivement des circuits 4 et 6 pour son alimentation en hydrogène et oxygène. Chacune de ces dérivations comporte une vanne commandable (vannes 30, 32) ; ces vannes 30 et 32 permettent ainsi de contrôler le fonctionnement du générateur de gaz 22 et par suite, du générateur électrique 20. Ces dérivations 44 et 46 sont connectées aux circuits 4 et 6 respectivement en amont de la pompe 8a et de la pompe 13. Ainsi avantageusement, le générateur de gaz 22 peut être alimenté en ergols via les dérivations 44 et 46, que les pompes 8a et 13 soient en fonctionnement ou à l'arrêt. Le fonctionnement du générateur de gaz 22 et donc du générateur électrique 20 nécessite seulement de faire fonctionner les pompes électriques de faible puissance 10 et 11, mais ne nécessite pas de faire fonctionner la turbopompe 8a ou la pompe 13, toutes deux de puissance nettement plus élevée.

Dans le générateur de gaz 22, l'hydrogène est brûlé par l'oxygène. Les gaz de combustion produits s'échappent par un circuit d'échappement qui traverse la turbine de génération d'électricité 24. Sous l'effet de la pression de ces gaz, la turbine de génération d'électricité 24 est entraînée en rotation.

L'énergie communiquée à la turbine de génération d'électricité 24 par les gaz de combustion est alors utilisée pour produire de l'électricité grâce à l'alternateur 26, qui est couplé à l'arbre de la turbine de génération d'électricité 24. L'énergie produite par les gaz de combustion permet donc au générateur électrique 20 de produire de l'électricité.

En aval de la turbine 24, les gaz s'échappant de la turbine 24 sont réinjectés dans le circuit d'hydrogène en aval de la turbine 8b de la turbopompe 8 (en un point A, Fig.1) ; le premier circuit d'alimentation 4 est donc agencé suivant un cycle fermé.

Une vanne commandable 50 est prévue sur le circuit d'évacuation des gaz de la turbine 24. Dans le cas où le moteur fonctionne à pleine puissance, cette vanne permet d'éviter que les gaz sortant de la turbine 8b ne remontent dans la turbine 24 (en sens inverse du sens de circulation souhaité).

La turbine 24 fonctionne de manière indépendante de la turbopompe 8 et de la pompe électrique 13. Notamment, elle ne sert pas à entraîner en rotation la pompe 8a de la turbopompe 8.

Le générateur électrique 20 et la turbopompe 8 peuvent donc être dimensionnés indépendamment l'un de l'autre.

Avantageusement, le générateur électrique 20 peut être mis en œuvre indépendamment du régime de fonctionnement du moteur-fusée 1. Il peut donc être mis en œuvre pendant toutes les phases de vol, ainsi qu'avant et après le vol.

Pour assurer la pressurisation du réservoir d'oxygène 3, le moteur-fusée 1 comporte en outre un échangeur thermique 40. Celui-ci est agencé sur le conduit 45 conduisant les gaz de combustion (chauds) produits par le générateur de gaz 22 à la turbine 24.

Un conduit de dérivation 42 est agencé en dérivation sur la dérivation 46 alimentant le générateur de gaz 22 en oxygène. Le conduit de dérivation 42 permet de prélever de l'oxygène liquide et de réchauffer et éventuellement de vaporiser au moins en partie celui-ci dans l'échangeur thermique 40, puis de réinjecter l'oxygène ainsi réchauffé et éventuellement vaporisé au sommet du réservoir 3. Le débit d'oxygène dans le conduit 42 est régulé par une valve commandée 48.

L'échangeur thermique 40 en association notamment avec le conduit 42 et la valve 48 constitue un dispositif de pressurisation permettant d'assurer le maintien d'une pression prédéterminée dans le réservoir d'oxygène 3. (L'échangeur thermique 40 pourrait éventuellement, dans un mode de réalisation différent, être agencé pour réchauffer de l'hydrogène et ainsi assurer aussi la mise sous pression du réservoir d'hydrogène).

Dans le moteur-fusée 1, les pompes de pressurisation 10,11, les vannes d'entrée 7, 12, le générateur électrique 20 (notamment les vannes 30 et 32), la vanne de contournement 16, la valve commandée 48, etc., sont connectés à une unité de commande (non-illustrée) pour la commande du moteur-fusée 1.

D'autre part, par sécurité une vanne 53 est disposée sur le circuit 4 d'alimentation en hydrogène de la pompe 8, en aval du point d'embranchement T auquel est raccordée la dérivation 44 d'alimentation en hydrogène du générateur de gaz 22.

Cette vanne 53 est une vanne commandable qui sert à empêcher toute remontée de gaz à travers la pompe 8 vers le réservoir 2. Elle est fermée notamment lorsque l'on détecte que la pompe 8 est arrêtée, pour empêcher toute remontée des gaz rejetés par le générateur de gaz 22 vers le réservoir 2 à travers la pompe 8, au cas où la pression à la sortie de la turbine 24 serait supérieure à la pression du réservoir 2.

Enfin, le moteur-fusée 1 comporte une batterie non représentée. Celle-ci assure le fonctionnement des pompes de pressurisation pendant la phase de démarrage du générateur électrique 20, avant que celui-ci ne produise une puissance électrique suffisante pour actionner les pompes de pressurisation : pendant cette phase, c'est cette batterie qui actionne les pompes de pressurisation.

Bien que, dans ce premier mode de réalisation, le circuit 4 fonctionne suivant un cycle « expander », dans des modes de réalisation alternatifs la turbopompe peut être actionnée de manière différente.

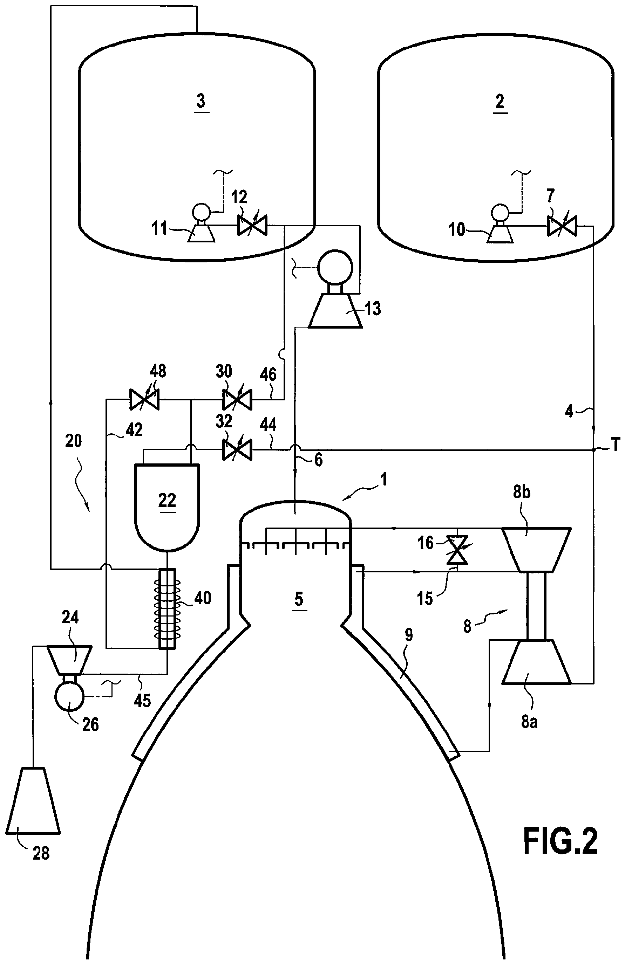

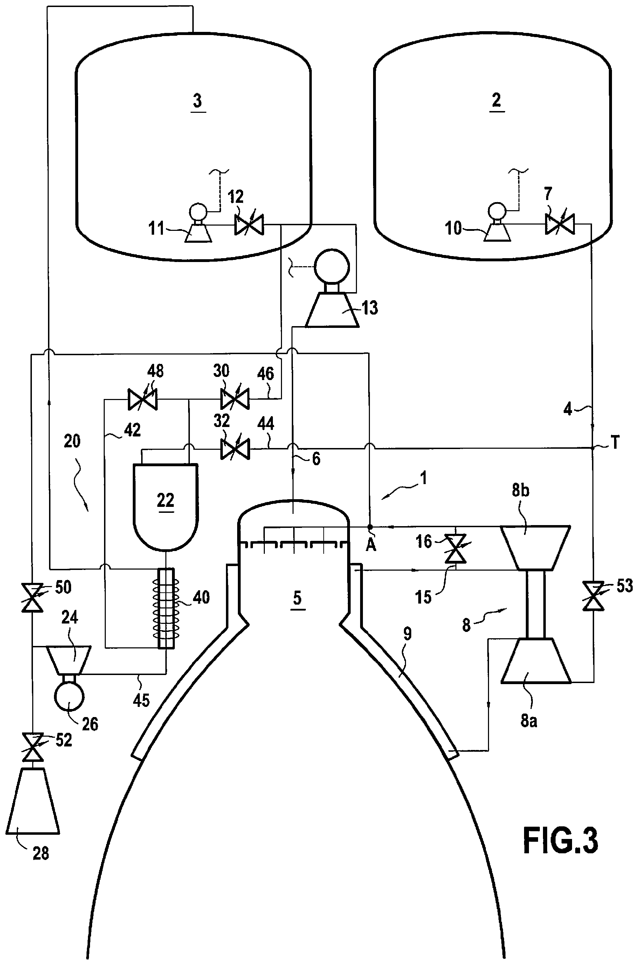

Des moteurs-fusées 1 suivant un deuxième et un troisième mode de réalisation sont ainsi illustrés respectivement sur les figures 2 et 3. La plupart des éléments de ces moteurs-fusées 1 sont identiques ou équivalents à ceux de la figure 1 et reçoivent en conséquence les mêmes signes de références.

Le moteur fusée 1 suivant le deuxième mode de réalisation (Figure 2) diffère de celui du premier mode de réalisation en ce que les gaz s'échappant de la turbine 24 ne sont pas redirigés vers le circuit d'hydrogène 4, mais vers une tuyère auxiliaire 28.

Le moteur fusée 1 suivant le troisième mode de réalisation (Figure 3) est un mode de réalisation intermédiaire entre les premier et deuxième modes de réalisation.

En effet, dans ce troisième mode de réalisation, les gaz s'échappant de la turbine 24 peuvent être :
- réinjectés dans le circuit d'hydrogène en aval de la turbine 8b de la turbopompe 8 (point A), et/ou
- dirigés vers une tuyère auxiliaire 28.

L'unité de commande du moteur-fusée 1 dirige les gaz s'échappant de la turbine 24 soit dans le circuit d'hydrogène 4, soit dans la tuyère auxiliaire 28, en fonction de la phase de vol, des valeurs de paramètres du moteur-fusée, etc., grâce à des vannes commandées 50, 52, disposées sur les conduites servant respectivement à réinjecter ces gaz dans le circuit d'hydrogène en aval de la turbine 8b (au point A), et/ou à diriger ceux-ci vers la tuyère auxiliaire 28. Le conduit d'échappement de la turbine de génération d'électricité 24 se divise donc en deux branches, à savoir une première branche débouchant dans le conduit servant à conduire les gaz d'échappement de la turbine 8b jusqu'à la chambre de combustion, et une deuxième branche débouchant dans la tuyère auxiliaire 28.

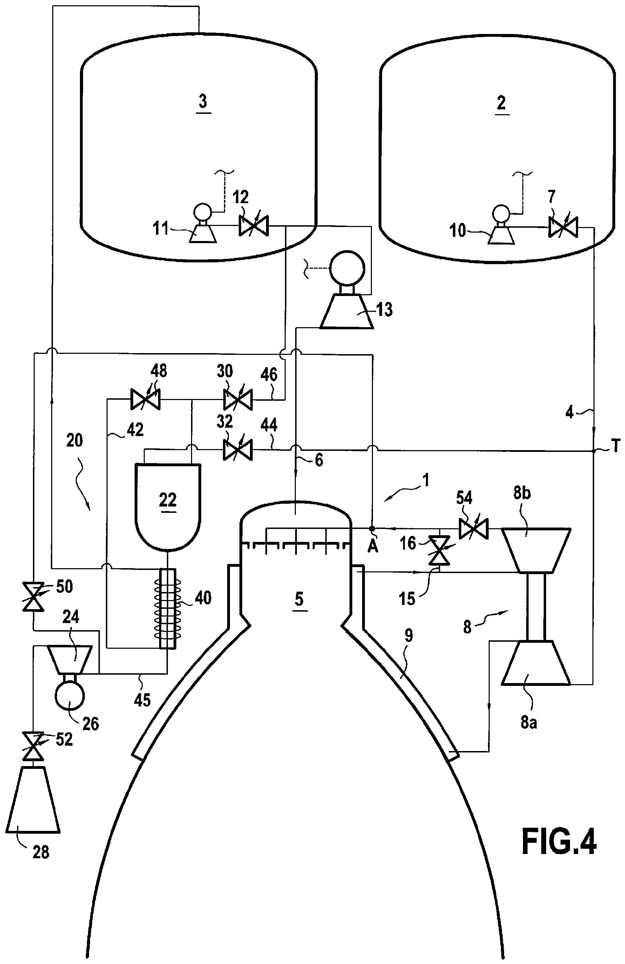

L'invention peut également être mise en œuvre dans un quatrième mode de réalisation (Fig. 4). Ce mode de réalisation est presque identique au troisième mode de réalisation, hormis deux différences.

La première différence est que le conduit de sortie des gaz sortant de la turbine 8b, n'est pas relié (depuis le point A, Fig.3 ou 4) au conduit de sortie des gaz sortant de la turbine de génération d'électricité 24, mais au conduit d'alimentation de la turbine de génération d'électricité 24. La turbine de génération d'électricité est donc interposée sur le conduit servant à conduire les gaz s'échappant de la turbine 8b jusqu'à la tuyère auxiliaire 28. Elle peut ainsi être alimentée par les gaz rejetés par la turbine 8b et peut donc produire de l'électricité à partir de la pression appliquée par ces gaz.

Le générateur électrique 20 fonctionne de manière indépendante de la pompe d'alimentation 8a (et bien sûr de la pompe 13), dans la mesure où quel que soit le régime de fonctionnement de la pompe 8a, il peut fonctionner en étant alimenté par le générateur de gaz 22, notamment lorsque le conduit allant de la turbine 8b la turbine 24 est fermé par la vanne 50.

La deuxième différence par rapport au troisième mode de réalisation de l'invention est que le circuit d'hydrogène 4 ne comporte pas la vanne 53. A la place, une vanne commandable 54 est disposée sur la conduite de sortie de la turbine 8b de la turbopompe 8, en amont du point de raccordement du passage 15 de contournement ou de bipasse de la turbine 8b.

Cette vanne 54 a la même fonction que la vanne 53 décrite précédemment et est commandée de la même manière, dans le même but d'empêcher une remontée vers le réservoir d'hydrogène 2 des gaz rejetés par le générateur de gaz 22.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. Par exemple, la vanne 53 peut également être remplacée par la vanne 54 dans les premier et troisième mode de réalisation.

En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Moteur-fusée (1) comportant
une chambre de combustion principale (5) ;
une tuyère principale pour éjecter les gaz de combustion produits dans la chambre de combustion principale ;
deux pompes d'alimentation en ergols (8a,13) disposées sur des circuits d'alimentation en ergols du moteur et configurées pour mettre les ergols sous pression afin de permettre l'alimentation de la chambre de combustion principale ;
deux pompes de pressurisation (10,11) pour pressuriser les réservoirs des ergols servant à l'alimentation du moteur ; et
un générateur électrique (20) ;
le générateur électrique (20) comprenant :
- un générateur de gaz (22) configuré pour être alimenté en mélange d'ergols pour provoquer une combustion ;
- une turbine de génération d'électricité (24) configurée pour être entraînée par des gaz de combustion du générateur de gaz ; et
- un alternateur (26) couplé mécaniquement à un arbre de la turbine de génération d'électricité ;
le moteur-fusée **se caractérisant en ce que** le moteur-fusée est configuré de manière à permettre l'alimentation du générateur de gaz en ergols par les deux pompes de pressurisation (10,11), et est configuré de manière à permettre une alimentation du générateur électrique (20) indépendamment de la rotation des pompes d'alimentation (8a,13).

2. Moteur-fusée selon la revendication 1, dans lequel une des pompes d'alimentation est une pompe électrique (13), et le générateur électrique (20) est configuré pour alimenter celle-ci en électricité.

3. Moteur-fusée selon la revendication 1 ou 2, comprenant une tuyère auxiliaire (28), à laquelle est relié un orifice d'échappement de la turbine de génération d'électricité (24).

4. Moteur-fusée selon l'une quelconque des revendications 1 à 3, dans lequel une des pompes d'alimentation est une pompe (8a) d'une turbopompe (8) disposée en aval d'une des pompes de pressurisation sur un premier circuit d'alimentation (4) permettant l'alimentation en ergol de la chambre de combustion principale du moteur-fusée.

5. Moteur-fusée selon les revendications 3 et 4, dans lequel un conduit relié à un orifice d'échappement de la turbine (8b) de la turbopompe comporte au moins deux branches, à savoir une première branche servant à conduire les gaz d'échappement de la turbine (8b) de la turbopompe jusqu'à la chambre de combustion, et une deuxième branche reliée à un orifice d'entrée de la turbine de génération d'électricité (24).

6. Moteur-fusée selon la revendication 4 ou 5, dans lequel ledit premier circuit d'alimentation (4) relie la sortie de la pompe (8a) de la turbopompe (8) avec l'entrée d'une turbine (8b) de la turbopompe à travers un échangeur de chaleur (9) configuré pour chauffer le premier ergol avec une chaleur générée dans une chambre de combustion (5) du moteur-fusée pour actionner la turbine (8b) de la turbopompe par détente du premier ergol après son chauffage.

7. Moteur-fusée selon l'une quelconque des revendications 4 à 6, comprenant une tuyère auxiliaire (28), et dans lequel un orifice d'échappement de la turbine (8b) de la turbopompe est relié à la tuyère auxiliaire (28).

8. Moteur-fusée selon l'une quelconque des revendications 4 à 7, dans lequel un conduit relié à un orifice d'échappement de la turbine (8b) de la turbopompe comporte au moins deux branches, à savoir une première branche servant à conduire les gaz d'échappement de la turbine (8b) de la turbopompe jusqu'à la chambre de combustion, et une deuxième branche reliée à une tuyère auxiliaire (28) et/ou à un orifice de sortie de la turbine de génération d'électricité (24).

9. Moteur-fusée selon la revendication 4, configuré de manière à conduire la totalité des gaz s'échappant de la turbine (8b) de la turbopompe dans la chambre de combustion (5).

10. Moteur-fusée selon l'une quelconque des revendications 1 à 7, comprenant en outre un échangeur thermique (40) apte à échauffer et/ou vaporiser au moins en partie l'un des ergols en prélevant de la chaleur sur des gaz de combustion produits par le générateur de gaz (22).

11. Moteur-fusée selon l'une quelconque des revendications 1 à 10, configuré pour générer une poussée maximale inférieure à 100 kN.

## Patentansprüche

1. Raketenmotor (1), umfassend
eine Hauptbrennkammer (5),
eine Hauptdüse zum Ausstoßen der in der Hauptbrennkammer erzeugten Verbrennungsgase,
zwei Treibstoffversorgungspumpen (8a, 13), die an Motortreibstoffversorgungsleitungen angeordnet und dazu konfiguriert sind, die Treibstoffe unter Druck zu setzen, um die Versorgung der Hauptbrennkammer zu ermöglichen,
zwei Druckbeaufschlagungspumpen (10, 11) zur Druckbeaufschlagung der zur Versorgung des Motors verwendeten Treibstofftanks, und
einen elektrischen Generator (20),
wobei der elektrische Generator (20) umfasst:
- einen Gasgenerator (22), der konfiguriert ist, um mit einem Treibstoffgemisch versorgt zu werden, um eine Verbrennung auszulösen,
- eine Stromerzeugungsturbine (24), die konfiguriert ist, um von Verbrennungsgasen vom Gasgenerator angetrieben zu werden, und
- einen Wechselstromgenerator (26), der mechanisch mit einer Welle der Stromerzeugungsturbine gekoppelt ist,
wobei der Raketenmotor **dadurch gekennzeichnet ist, dass** der Raketenmotor so konfiguriert ist, dass er die Versorgung des Gasgenerators mit Treibstoffen durch die beiden Druckbeaufschlagungspumpen (10, 11) ermöglicht, und so konfiguriert ist, dass er die Versorgung des elektrischen Generators (20) unabhängig von der Rotation der Versorgungspumpen (8a, 13) ermöglicht.

2. Raketenmotor nach Anspruch 1, wobei eine der Versorgungspumpen eine elektrische Pumpe (13) ist und der elektrische Generator (20) dazu konfiguriert ist, diese mit Strom zu versorgen.

3. Raketenmotor nach Anspruch 1 oder 2, umfassend eine Hilfsdüse (28), an die eine Auslassöffnung der Stromerzeugungsturbine (24) angeschlossen ist.

4. Raketenmotor nach einem der Ansprüche 1 bis 3, wobei eine der Versorgungspumpen eine Pumpe (8a) einer Turbopumpe (8) ist, die stromabwärts von einer der Druckbeaufschlagungspumpen an einer ersten Versorgungsleitung (4) angeordnet ist, um die Hauptbrennkammer des Raketenmotors mit Treibstoff zu versorgen.

5. Raketenmotor nach einem der Ansprüche 3 und 4, wobei ein mit einer Auslassöffnung der Turbine (8b) der Turbopumpe verbundener Kanal mindestens zwei Zweige aufweist, nämlich einen ersten Zweig zum Leiten von Abgasen von der Turbine (8b) der Turbopumpe in die Brennkammer, und einen zweiten Zweig, der mit einer Einlassöffnung der Stromerzeugungsturbine (24) verbunden ist.

6. Raketenmotor nach Anspruch 4 oder 5, wobei die erste Versorgungsleitung (4) den Pumpenauslass (8a) der Turbopumpe (8) mit dem Einlass einer Turbine (8b) der Turbopumpe über einen Wärmetauscher (9) verbindet, der dazu konfiguriert ist, den ersten Treibstoff mit einer Wärme zu erhitzen, die in einer Brennkammer (5) des Raketenmotors erzeugt wird, um die Turbine (8b) der Turbopumpe durch Expansion des ersten Treibstoffs nach dessen Erhitzung anzutreiben.

7. Raketenmotor nach einem der Ansprüche 4 bis 6, umfassend eine Hilfsdüse (28), und wobei eine Auslassöffnung der Turbine (8b) der Turbopumpe mit der Hilfsdüse (28) verbunden ist.

8. Raketenmotor nach einem der Ansprüche 4 bis 7, wobei ein mit einer Auslassöffnung der Turbine (8b) der Turbopumpe verbundener Kanal mindestens zwei Zweige aufweist, nämlich einen ersten Zweig zum Leiten von Abgasen von der Turbine (8b) der Turbopumpe in die Brennkammer, und einen zweiten Zweig, der mit einer Hilfsdüse (28) und/oder einer Auslassöffnung der Stromerzeugungsturbine (24) verbunden ist.

9. Raketenmotor nach Anspruch 4, der so konfiguriert ist, dass er alle aus der Turbine (8b) der Turbopumpe austretenden Gase in die Brennkammer (5) leitet.

10. Raketenmotor nach einem der Ansprüche 1 bis 7, ferner umfassend einen Wärmetauscher (40), der in der Lage ist, zumindest teilweise einen der Treibstoffe zu erhitzen und/oder zu verdampfen, indem er Wärme von Verbrennungsgasen entnimmt, die von dem Gasgenerator (22) erzeugt werden.

11. Raketenmotor nach einem der Ansprüche 1 bis 10, der dazu konfiguriert ist, eine maximale Schubkraft von weniger als 100 kN zu erzeugen.

## Claims

1. A rocket engine (1) including
a main combustion chamber (5);
a main nozzle for ejecting the combustion gases produced in the main combustion chamber;
two propellant supply pumps (8a, 13) disposed on circuits for supplying propellant to the engine and configured to pressurize the propellants in order to allow the supply of the main combustion chamber;
two pressurization pumps (10, 11) for pressurizing the tanks of the propellants used to supply the engine; and
an electric generator (20);
the electric generator (20) comprising:
- a gas generator (22) configured to be supplied with a mixture of propellants to cause combustion;
- an electricity generation turbine (24) configured to be driven by combustion gases from the gas generator; and
- an alternator (26) mechanically coupled to a shaft of the electricity generation turbine;
the rocket engine being **characterized in that** the rocket engine is configured so as to allow the supply of the gas generator with propellants by the two pressurization pumps (10, 11), and is configured so as to allow a supply of the electric generator (20) independently of the rotation of the supply pumps (8a, 13).

2. The rocket engine according to claim 1, wherein one of the supply pumps is an electric pump (13), and the electric generator (20) is configured to supply the latter with electricity.

3. The rocket engine according to claim 1 or 2, comprising an auxiliary nozzle (28), to which an exhaust port of the electricity generation turbine (24) is connected.

4. The rocket engine according to any one of claims 1 to 3, wherein one of the supply pumps is a pump (8a) of a turbopump (8) disposed downstream of one of the pressurization pumps on a first supply circuit (4) for supplying propellant to the main combustion chamber of the rocket engine.

5. The rocket engine according to claims 3 and 4, wherein a duct connected to an exhaust port of the turbine (8b) of the turbopump includes at least two branches, namely a first branch used to conduct the exhaust gases of the turbine (8b) from the turbopump to the combustion chamber, and a second branch connected to an inlet port of the electricity generation turbine (24).

6. The rocket engine according to claim 4 or 5, wherein said first supply circuit (4) connects the outlet of the pump (8a) of the turbopump (8) with the inlet of a turbine (8b) of the turbopump through a heat exchanger (9) configured to heat the first propellant with heat generated in a combustion chamber (5) of the rocket engine to actuate the turbine (8b) of the turbopump by expansion of the first propellant after its heating.

7. The rocket engine according to any one of claims 4 to 6, comprising an auxiliary nozzle (28), and wherein an exhaust port of the turbine (8b) of the turbopump is connected to the auxiliary nozzle (28).

8. The rocket engine according to any one of claims 4 to 7, wherein a duct connected to an exhaust port of the turbine (8b) of the turbopump includes at least two branches, namely a first branch used to conduct the exhaust gases from the turbine (8b) of the turbopump to the combustion chamber, and a second branch connected to an auxiliary nozzle (28) and/or to an outlet port of the electricity generation turbine (24).

9. The rocket engine according to claim 4, configured so as to conduct all the gases escaping from the turbine (8b) of the turbopump in the combustion chamber (5).

10. The rocket engine according to any one of claims 1 to 7, further comprising a heat exchanger (40) able to heat and/or vaporize at least partly one of the propellants by taking heat from the combustion gases produced by the gas generator (22).

11. The rocket engine according to any one of claims 1 to 10, configured to generate a maximum thrust of less than 100 kN.
